# EUROPEAN PATENT APPLICATION

(11) **EP 1 986 376 A1**
(43) Date of publication of application: **29.10.2008**
(21) Application number: 07290526.8
(22) Date of filing: 27.04.2007
(51) Int. Cl.: H04L 12/56, H04Q 7/38

(54) **Method for counting a number of mobile stations in a radio access network**

(71) Applicant: Alcatel Lucent, 75008 Paris (FR)
(72) Inventor: Linden, Gabriel, 78450 Villepreux (FR); Bourdeaut, Stanislas, 75015 Paris (FR)
(74) Representative: Ameline, Jean-Paul B.C.

(57) **Abstract**

The invention relates to a method of counting a total number of mobile stations (114) in a radio access network (100), the method comprising:
- transmitting a counting request to said mobile stations (114),
- receiving first connection requests from mobile stations (114) being in idle mode,
- transmitting in response to said first connection requests a response message to each mobile station (114) in idle mode, the response message instructing each of the mobile stations (114) to terminate transmitting of further connection requests,
- determining the total number of mobile stations (114) by analyzing the number of received first connection requests of the mobile stations (114) being in idle mode.

## Description

### Technical field

The invention relates to a method of counting a total number of mobile stations in a radio access network, a radio resource controller, a method of providing a connection request from a mobile station in a radio access network, a mobile station and a computer program product.

### Background and related art

One of the most challenging tasks in mobile telecommunication is to provide video services to a wireless user. While existing second generation wireless networks support voice services, third generation wireless systems and packet based wireless network's goal is to support the provision of video services to a customer. A universal mobile telecommunication system (UMTS) constitutes the third generation (3G) of cellular wireless networks which aims to provide high speed data access along with real time voice and video calls. However, with the provision of media services to customers, the problem has arisen that a limited bandwidth for data transmission has to be distributed effectively among a multitude of wireless users. Therefore, there is a lot of research work going on in the industry to support the high bandwidth video and multimedia applications via wireless networks.

Multimedia broadcast/multicast service (MBMS) is one of the evolving service concepts within the third generation networks. MBMS is a user service, which is a combination of both a broadcast service and a multicast service. Third generation partnership (3GPP) is working on establishing standards for multimedia broadcast and multicast services.

3GPP MBMS services can be provided in each cell by either multiple point to point (PTP) channels or by a single point to multipoint (PTM) channel which requires a decision to be made between these two approaches. Thereby, this decision is drawn with respect to an effective resource saving for transmitting multimedia services to a multitude of wireless users.

In general, the broadcast mode is an unidirectional point to multipoint transmission of multimedia data from a single source entity to all users in a broadcast service area. In contrary, a multicast service received by a wireless user involves one or more successive multicast sessions. Thereby, clearly PTM is useful when a large number of users are present in a cell, but not useful on small numbers of users.

One of the fundamental selection criterion which channel type (PTM or PTP) to be used is the amount of node B power required to transmit to a group of users. PTM transmissions to cover the cell perimeter require high power. In some cases where the MBMS service group has few users it could be preferable to transmit the requested service PTP using DCH's where power control is available. However if MBMS groups with considerable number of users with the same service content are present, establishing a common forward access channel (FACH) for all users could in many ways be the best solution, since it requires less cell resources and decreases the transmit complexity in a way that the service is multicast/broadcasted for all users in the cell in a unique common channel avoiding multiple transmissions of the same content.

In order to be able to decide if a transmission has to be performed in PTP or PTM mode, for example a resource manager has to know how many users are requesting for a given multimedia service. Therewith, MBMS counting is used to determine the optimum transmission mechanism for a given service. The need for counting is indicated in a notification sent to users and achieved by requesting user equipments (UEs) of said users belonging to the same MBMS service group to respond to counting by sending a MBMS counting response signaling flow to the responsible radio network controller (RNC). Thereby, for user equipments in idle modes the counting response refers to the RRC connection establishment procedure. For user equipments in the URA-PCH, or the Cell-PCH state the counting response refers to the cell update procedure.

For user equipments in the Cell-FACH state the counting response refers to signaling on the common control channel (CCCH) or the common control channel (CCCH) and thereby, the CCCH channel is used to transmit the controller information between the user equipment and the network. The dedicated control channel (DCCH) is used for a one to one transmission of control information between the user equipment and the network when the connection exists between the user equipment and the radio resource controller. The MBMS counting is described in detail in the 3GPP TS 25.346 and 3GPP TS 25.331 specifications. A method and apparatus for transmitting and receiving MBMS control information in an MBMS mobile communication system are disclosed in US 2005/0020260 A1.

In general, the 3GPP MBMS counting mechanism appears to be fairly well defined. However, currently these procedures do not work completely properly since the current signaling enforces the RNC to establish an RRC (radio resource controller) connection for UEs answering to counting. Establishing an RRC connection for counting is time and resource consuming for both the UE and the network. It is currently not possible to count in a proper way UEs interested in a list of MBMS services and maintain these UEs in RRC idle mode.

It should be noted, that in order to limit, in a specific cell, the number of responding UEs for counting purposes to RRC connected mode at the same time, the load due to the RRC connection establishment requests is controlled with the access 'probability factor'. For example, a probability factor of 0.2 means, that UEs answer only with a probability of 20%. Thereby, upon receiving the MBMS access information message including one or more MBMS selected services, the UE draws a random number for each selected service. The UE only responds to the RNC if there is at least one such random number with a value lower than the value (for example 0.2) indicated by the access probability factor assigend for the concerned service. More details can be found in the 3GPP TS 25.331 specification.

For UEs in idle mode answering to the counting, the RNC may choose to establish (or not) an RRC connection. For UEs in idle mode answering to the counting, the RNC may also choose not to establish the RRC connection, e.g. by sending the RRC connection reject message. This also allows the radio access network to limit the number of users which are maintained in RRC connected mode.

However, the current standard (TS 25.331) does not allow to reject the RRC connection request since the current rejection procedure only includes 'congestion' or 'unspecified' causes. However, these causes are not sufficient to ensure that for example load control mechanisms work properly. The congestion value may be interpreted by the UE so that congestion occurs in the radio access network and applies to any service. Therefore, if reject cause would be congestion, the UE receiving the RRC connection reject may limit its accesses to the radio access network for any type of services. The unspecified value does also not ensure currently that the UE will not start again a counting response: on receipt of the 'unspecified' cause the UE may understand that the counting response was not taken into account by the RNC and the UE may try to reattempt a counting response. However, a reattempt of counting response leads to a wrong counting of UEs, since UEs may be counted multiple times. Also, the use of 'wait time' as a cause is irrelevant since it does not reflect the next notification and counting request, since it is not related to the schedule of the service.

Therefore, currently the standards enforce the establishment of an RRC connection for every UE answering to an MBMS counting request. On receipt of an RRC connection request, the RNC establishes an RRC connection and sends an RRC connection setup. For MBMS services which are broadcast, this requires a lot of network resources while it is not a prerequisite to maintain the UE in the RRC connected mode after the UE has answered to the counting.

### Summary of the invention

The present invention provides a method of counting a total number of mobile stations in a radio access network, the method comprising transmitting a counting request to said mobile stations, receiving first connection requests for mobile stations being in idle mode, transmitting a response to said first connection requests a response message to each mobile station in idle mode, the response message instructing each of the mobile stations to terminate transmitting of further connection requests and determining the total number of mobile stations by analyzing the number of received first connection requests of the mobile stations being in idle mode.

Instructing each of the mobile stations in idle mode to terminate transmitting of further connection requests has the advantage, that the counting procedure of the total number of mobile stations is not falsified by multiple connection requests of mobile stations in idle mode. This allows to count and calculate accurately a total number of mobile stations in a radio access network, which is for example necessary in order to provide optimum radio transmission parameters for broadcast services or other services, or in order to design in an optimal way a radio access network.

In accordance with an embodiment of the invention, the response message is further instructing each of the mobile stations in idle mode to maintain the idle mode. Therewith, for example a radio resource controller (RRC) connection for mobile stations in idle mode does not have to be established, which conserves RRC system resources but still allows respective mobile stations in idle mode to properly receive broadcast services provided via said RRC with optimum transmission parameters.

In accordance with an embodiment of the invention, the method further comprises receiving second connection requests from mobile stations being in connected mode, wherein determining the total number of mobile stations further comprises analyzing the number of received second connection requests of the mobile stations being in connected mode. By including the number of mobile stations being in connected mode into the analysis for counting the total number of mobile stations in the radio access network, it is possible to accurately perform such a counting method, since all mobile stations in all kinds of connection/Idle modes are properly included in the counting. Thereby, the counting may also take into account the probability factor set for mobile stations in a radio access network as specified for example in the 3GPP TS 25.346.

In accordance with an embodiment of the invention, the counting is performed in order to enable an optimum transmission for a multimedia broadcast/multicast service (MBMS). This allows the choice of extremely efficient transport channels in terms of for example power consumption. Therewith, a highly efficient distribution of multimedia data streams to mobile stations in the radio access network can be realized. Depending on the total number of mobile stations in the radio access network, a broadcast mode or a multicast mode can be chosen by a respective radio network controller for providing an MBMS service.

In accordance with an embodiment of the invention, the response message is a radio resource controller (RRC) connection reject message, wherein the RRC connection reject message comprises an information element indicating a "counting completion". Since the response message is a RRC connection reject message, it is possible to include the instructions for mobile stations to terminate transmitting of further connection requests and to maintain the idle mode into an existing RRC protocol. This requires only minor additions to said RRC connection reject protocol, which nevertheless has the effect of enabling a radio access network to optimize a radio resource management with optimized resource consumption at the radio network controller.

In another aspect, the invention relates to a radio resource controller adapted to perform the method of counting a total number of mobile stations in the radio access network according to the invention.

In another aspect, the invention relates to a method of providing a connection request from a mobile station in a radio access network, the mobile station being in idle mode, the method comprising receiving a counting request, transmitting a connection request, receiving a response message, the response message instructing the mobile station to terminate transmitting of further connection requests and terminating the transmission of further connection requests.

In accordance with an embodiment of the invention, the method further comprises maintaining the mobile station in idle mode in case of receiving the response message, the response message further instructing the mobile station to terminate transmitting of further connection requests.

In another aspect, the invention relates to a mobile station adapted to perform the method of providing a connection request for a mobile station in a radio access network according to the invention.

In another aspect, the invention relates to a computer program product comprising computer executable instructions to perform the method of providing a connection request from a mobile station in a radio access network according to the invention and/or the method according to the invention of counting a total number of mobile stations in a radio access network.

### Brief description of the drawings

In the following preferred embodiments of the invention will be described in greater detail by way of example only making reference to the drawings in which:
- Fig 1:: shows a block diagram of a radio access network architecture,
- Fig 2:: shows a flowchart illustrating a method for counting mobile stations in a radio access network.
- Fig 3:: shows a further flowchart illustrating a method for providing a connection request from a mobile station in a radio access network to a radio network controller.

### Detailed description

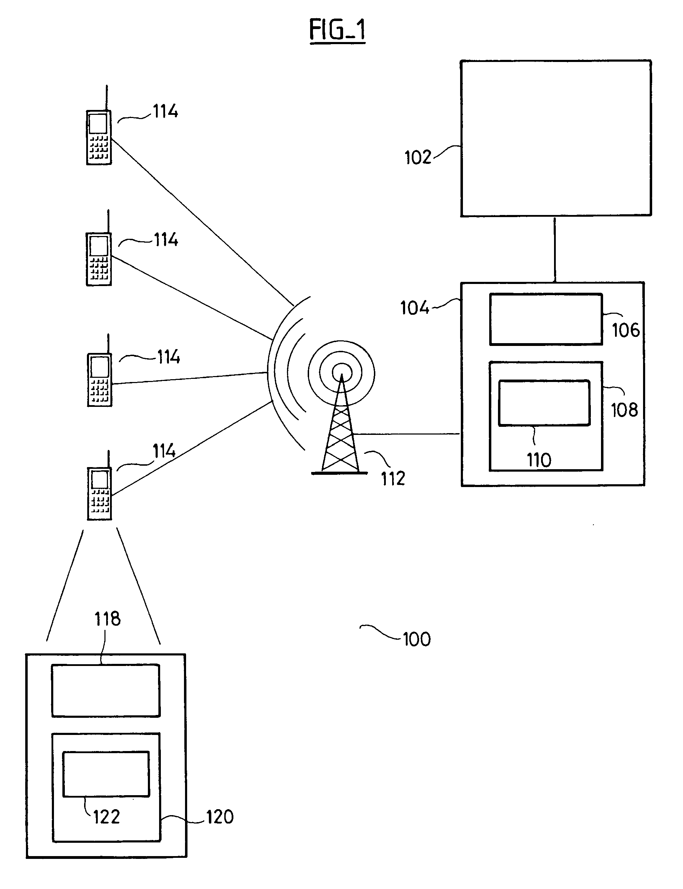

Fig. 1 shows a block diagram of a radio access network architecture 100. The radio access network comprises a core network 102. The radio access network itself comprises the radio network controller 104 and a node B (base station) 112. Thereby, the core network is responsible for switching and routing voice and data connections, while the radio access network handles all radio related functionalities.

The radio network controller (RNC) 104 comprises a processor 106 and a memory 108. The memory 108 comprises a program module 110 comprising computer executable instructions being executable by the processor 106. In the present example, the base station constituted by the node B 112 provides radio coverage to one given cell. In fig. 1, the node B 112 is communicating to four user equipments (UEs) 114 and to the RNC 104, whereby the connection to the RNC 104 is established via a respective interface not shown here.

Each of the UEs 114 comprises a processor 118 and a memory 120. Thereby the memory 120 comprises a program module 122 comprising instructions executable by the processor 118. Not shown here is usual equipment comprised in UEs like keypads, displays, a receive and transmit section for communication with the node B 112 etc.

As an example, all four UEs 114 belong to the same MBMS service group. In this case, in order to allow the radio access network to optimize the radio resource management and adapt a MBMS radio bearer to the number of users in the area (e.g. utilizing PTB bearers, PTM bearers, single frequency network techniques etc), the radio access network needs to perform accounting in MBMS in order to determine the total number of UEs in the respective cell belonging to the specific MBMS service group. Based on said counting, the RNC 104 may then either decide to perform a multimedia data transmission using multiple point to point channels or by using a single point to multipoint channel. Thereby, said counting is performed using the program module 110.

It has now to be distinguished between UEs 114 being in RRC connected mode and UEs 114 being in RRC idle mode. In RRC connected mode, the RNC 104 sends MBMS access information and MBMS modified services information on the MBMS Control Channel (MCCH) to the UEs. Upon receiving the MBMS access information message including one or more MBMS selected services, the UEs in connected mode issue an RRC cell update which is then transmitted using the random access channel (RACH) to the RNC. In response, the RNC issues an RRC cell update confirmation on the forward access channel (FACH).

Since said UEs are already in the RRC connected mode, providing an MBMS service to said UEs 114 will not require significant additional network resources since already existing connected channels can be used for further communication between the UEs 114 and the RNC 104.

However, if one or some of the UEs 114 are in idle mode, in state of the art radio access networks after receiving MBMS access information and MBMS modified service information on the MCCH channel the UEs will respond by sending a connection request to the RNC on the RACH channel. This typically leads to an intense signaling between the UE and the RNC, since in response the RNC 104 has to set up an RRC connection with the respective UEs 114 in idle mode. Establishing an RRC connected mode with said UEs having been in RRC idle mode consumes network resources, processing and triggers signaling overhead over the whole network, while especially in case of broadcast services, an RRC connected mode is not required in order to enable providing of an MBMS service to a UE 114.

In general as known from state of the art, by sending a notification of service modification from the node B 112 to the UEs 114, on receipt of the notification the UEs in idle mode read on the MBMS control channel the information about the modified services and then decode the access information in order to answer to the counting by sending a connection request. However, instead of establishing now an RRC connection to said UEs in idle mode, in order to allow to maintain respective UEs in idle mode an RRC connection reject is sent to the said UEs 114 by the RNC 104. In order to indicate, that accounting has been correctly performed, the network sends said RRC connection reject comprising a new information element "counting completion" on the CCCH channel to the respective UEs 114 indicating that counting of the UEs has been taken properly into account and that the procedure has terminated. This indication can thereby be sent within said RRC connected reject message but could also be sent in any another message received by the UEs 114.

In case of failure of counting for example due to network congestion or any other reason, the network may send the existing rejection causes "congestion" or "unspecified". On receipt of these existing rejection causes, the UEs 114 may reattempt transmitting a counting response according to existing procedures as for example specified in TS 25.331. On receipt of the new "counting completion" information, the UEs 114 consider that the counting procedure has terminated and a reattempt transmitting an RRC connection request to the RNC 104 is only performed if a new counting procedure has to be started. This is for example necessary if the UEs 114 wish to receive another MBMS service.

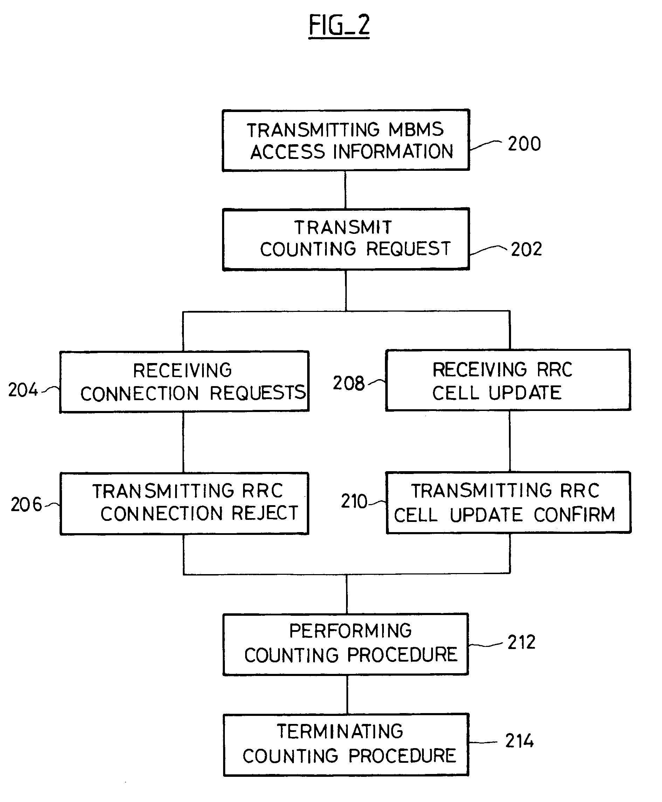

Fig. 2 shows a flowchart illustrating a method for counting mobile stations in a radio access network. In step 200, after the RNC has sent an MBMS notification update command to the node B, the node B transmits an Notification Indication on the MICH channel to all UEs in broadcast mode. This triggers the UEs which are interested in a given MBMS service to listen on the MCCH channel in order to decode access information transmitted from the RNC on the MCCH channel. Thereby, the RNC triggers the counting procedure for one or a set of MBMS services for RRC connected and idle mode UEs. This is indicated in fig. 2 with the "transmit counting request" in step 202.

Depending if the UE is in RRC idle mode or in RRC connected mode, the counting procedure proceeds either in step 204 or in step 208. If the UE is in RRC idle mode, the RNC receives in step 204 an RRC connection request on the RACH channel. In response, in case the counting of the respective UE has been properly taken into account, an RRC connection reject message comprising an element regarding "counting completion" is sent on the FACH channel from the RNC to the UE. This ensures, that the MBMS counting procedure is accurate - a respective UE is only counted once, while the UE is kept in RRC idle mode which allows further providing of an MBMS service to said UE with minimum consumption of necessary network resources.

In case the UE is in RRC connected mode, the UE transmits an RRC cell update on the RACH channel to the RNC according protocols known in the art. After receiving said RRC cell update in step 208, the RNC transmits an RRC cell update confirmation information on the FACH channel to the UE. This indicates the UE that counting is terminated and that the UE shall not send further RRC cell update information regarding said counting procedure to the RNC. It should be noted, that the RRC connected mode in the present context relates to URA-PCH, Cell-PCH and Cell-FACH states UE cases.

Either after step 206 or after step 210 the RNC performs the counting procedure by taking into consideration the received RRC cell update messages and RRC connection request messages. The counting procedure in step 212 also considers, that due to an access probability factor not all UEs may have responded to the MBMS modified service notification sent from the RNC to the UE.

Finally, in step 214, the counting procedure is terminated.

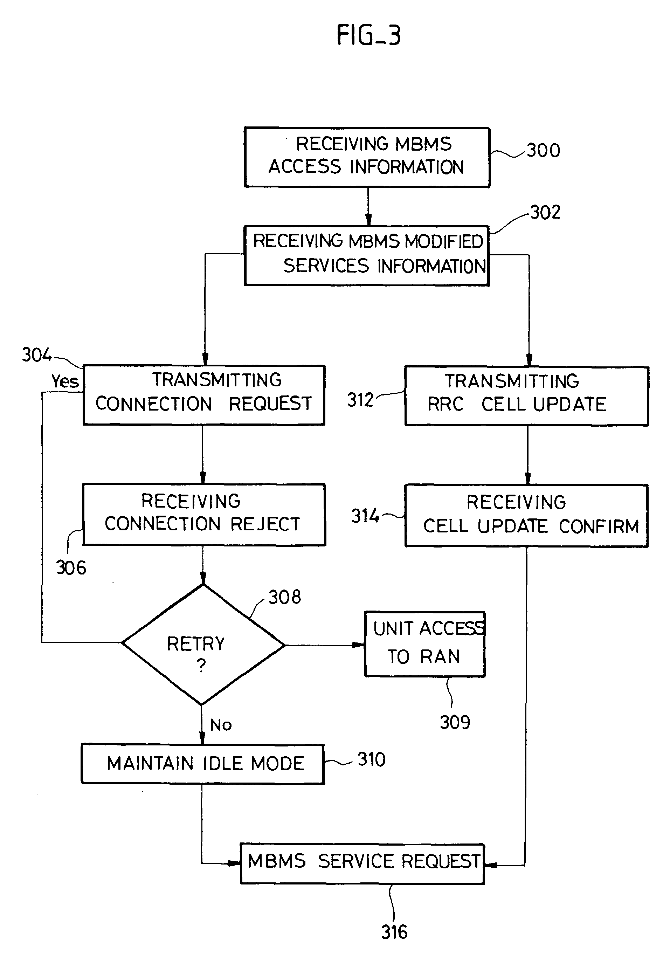

Fig. 3 shows a further flowchart illustrating a method for providing a connection request from a mobile station in a radio access network to a radio network controller. In step 300, MBMS access information is received on the MCCH channel. whereby before the UE was triggered to receive said MBMS access information by listening on the MICH channel. Decoding the MCCH channel leads in step 302 to a receiving of MBMS modified services information. Thereby, the RNC triggers the accounting procedure for one or several MBMS services for RRC idle and connected mode UEs.

In case a respective UE is in RRC idle mode, in step 304 the UE transmits an RRC connection request on the RACH channel to the RNC. In response, the UE receives in step 306 an RRC connection reject message on the FACH channel. In case, the RRC connection reject message contains any information element according to the state of the art like "congestion" or "unspecified", the UE may either in step 308 decide to retransmit the connection request of step 304 or to limit its accesses to the radio access network in step 309. However, if in case the RRC connection reject comprises an information element "counting completion", the UE considers that it has been counted by the RNC properly and that no further RRC connection requests have to be transmitted to the RNC. The "counting completion" information element further indicates the UE to maintain idle mode in step 310. Therewith, no RRC connection is built up with the respective UE which would unnecessarily consume additional network resources.

A termination of the MBMS counting procedure occurs, if the UE in idle mode detects that a MBMS access information message is not provided at an access info period or if the UE receives an MBMS access information message not including an MBMS service the UE has joined or is interested in, or if the UE receives the RRC connection reject message including the "counting completion" information element.

In contrary, in case a UE is in RRC connected mode, after step 302 the UE transmits an RRC cell update message on the RACH channel to the RNC. In response, in step 314 the RNC sends back an RRC cell update confirmation message on the FACH channel to the UE. Thereby, counting is terminated, if the MBMS access information message is not provided at an access info period or if the MBMS access information message does not include any MBMS service the UE is interested in. For further details, refer to the 3GPP specification TS 25.331 section 8.7.4.4.

Either after step 310 or after step 314, the usual MBMS service request procedure according to the state of the art is performed by the UE in step 316.

### List of Reference Numerals

| | |
|---|---|
| 100 | Radio access network |
| 102 | Core network |
| 104 | Radio network controller |
| 106 | Processor |
| 108 | Memory |
| 110 | Program module |
| 112 | Node B |
| 114 | Mobile station |
| 118 | Processor |
| 120 | Memory |
| 122 | Program module |

## Claims

1. A method of counting a total number of mobile stations (114) in a radio access network (100) the method comprising:
- transmitting a counting request to said mobile stations (114),
- receiving first connection requests from mobile stations (114) being in idle mode,
- transmitting in response to said first connection requests a response message to each mobile station (114) in idle mode, the response message instructing each of the mobile stations (114) to terminate transmitting of further connection requests,
- determining the total number of mobile stations (114) by analyzing the number of received first connection requests of the mobile stations (114) being in idle mode.

2. The method of claim 1, wherein the response message is further instructing each of the mobile stations (114) in idle mode to maintain the idle mode.

3. The method of claim 1, wherein further second connection requests are received from mobile stations (114) being in connected mode, wherein determining the total number of mobile stations (114) further comprises analyzing the number of received second connection requests of the mobile stations (114) being in connected mode.

4. The method of claim 1, wherein the counting is performed to determine an optimum transmission for a multimedia broadcast/multicast service (MBMS).

5. The method of claim 1, wherein the response message is a radio resource controller (RRC) connection reject message, wherein the RRC connection reject message comprises an information element indicating a counting completion.

6. A radio network controller (104) adapted to perform any of the method steps 1 to 5.

7. A method of providing a connection request from a mobile station (114) in a radio access network (100), the mobile station (114) being in idle mode, the method comprising:
- receiving a counting request,
- transmitting a connection request,
- receiving a response message, the response message instructing the mobile station (114) to terminate transmitting of further connection requests,
- terminating the transmission of further connection requests.

8. The method of claim 7, further comprising maintaining the mobile station (114) in idle mode, wherein the response message is further instructing the mobile station (114) to terminate transmitting of further connection requests.

9. A mobile station (114) adapted to perform any of the method steps of claims 7 to 8.

10. A computer program product (110; 122) comprising computer executable instructions adapted to perform any of the preceding method steps.
